Europäisches Patentamt

**European Patent Office**

Office européen des brevets

(11) Numéro de publication: **0 171 480**
**B1**

(12) **FASCICULE DE BREVET EUROPEEN**

(45) Date de publication du fascicule du brevet:
08.02.89

(51) Int. Cl.⁴: **C 04 B 24/14**

(21) Numéro de dépôt: **84401677.4**

(22) Date de dépôt: **16.08.84**

(54) **Adjuvant de nature protéinique pour liants hydrauliques, mortiers et bétons, et son utilisation dans le domaine de la construction.**

(43) Date de publication de la demande:
**19.02.86 Bulletin 86/8**

(45) Mention de la délivrance du brevet:
**08.02.89 Bulletin 89/6**

(84) Etats contractants désignés:
**AT BE CH DE FR GB IT LI LU NL SE**

(56) Documents cités:
**DE-C- 401 046**
**DE-C- 511 513**
**FR-A- 2 374 271**
**FR-A- 2 541 991**

**CHEMICAL ABSTRACTS, vol. 88, 1978, pages 277,278,
no. 140835t, Columbus, Ohio, US; & JP - A - 77 124 021
(AJINOMOTO CO., INC.) 18-10-1977**

(73) Titulaire: **ABC BIO-INDUSTRIES, S.A., 204, Rond Point du
Pont de Sèvres Tour Vendôme, F-92516 Boulogne (FR)**

(72) Inventeur: **Caillau, Pierre, 169 Bd Murat, F-75016 Paris
(FR)**
Inventeur: **Morgan, Paul, Résidence l'Orée du Bois,
F-78380 Bougival (FR)**
Inventeur: **de Cadier de Veauce, Charles, 5, Avenue du
Maréchal Juin, F-92100 Boulogne (FR)**

(74) Mandataire: **Combe, André, CABINET BEAU DE
LOMENIE 55, rue d'Amsterdam, F-75008 Paris (FR)**

## Description

La présente invention concerne un nouvel adjuvant, qui est de nature protéinique, pour liants hydrauliques, mortiers et bétons. Elle concerne également l'utilisation de cet adjuvant dans le domaine de la construction.

Dans ce qui suit par l'expression «substance protéinique» ou «substance de nature protéinique» on entend tout produit appartenant à l'ensemble constitué par les protéines, les polypeptides et leurs mélanges; et par l'expression «hydrolysat protéinique» on entend tout produit appartenant à l'ensemble constitué par les protéines, les polypeptides, les aminoacides et leurs mélanges.

On sait que l'on déjà préconisé dans le domaine de la construction d'utiliser des protéines notamment pour réaliser des bétons-mousses et des bétons colloïdaux légers. On pense, selon les indications données dans l'ouvrage de Keitel, «Zement Herstellung und Eigenschaften» Springer-Verlag Berlin–Heidelberg–New York 1971, page 186, lignes 38–40, que les anciens Romains utilisaient du sang animal dans la fabrication de béton poreux. Or il se trouve que l'utilisation de protéines soulève des difficultés dans le domaine de la construction en induisant des retards de prise comme indiqué par Joisel dans «Adjuvant du ciment», Editions Star, Paris 1965, pages 45 et 105.

On sait par ailleurs du brevet américain Nr. 4 203 674, qui préconise d'utiliser du sang en poudre en tant que colloïde entraîneur d'air en association avec un autre colloïde (notamment l'hydroxyéthylcellulose, l'hydroxypropylméthylcellulose et la carboxyméthylcellulose) pour obtenir des bétons et mortiers allégés, que le sang liquide ne convient pas pour la fabrication desdits bétons et mortiers allégés.

Selon l'invention on préconise une nouvelle solution technique pour améliorer les résistances mécaniques (notamment en traction, flexion et compression), diminuer le ressuage et la ségrégation, et améliorer enfin l'ouvrabilité des liants hydrauliques, bétons et mortiers. Cette nouvelle solution technique qui modifie favorablement un certain nombre de paramètres rhéologiques met en œuvre des hydrolysats protéiniques liquides, différents des adjuvants antérieurement connus dans le domaine de la construction.

L'adjuvant protéinique préconisé selon l'invention pour améliorer les propriétés mécaniques, l'ouvrabilité et diminuer le ressuage et la ségrégation des liants hydrauliques, bétons et mortiers est caractérisé en ce qu'il s'agit d'un hydrolysat protéinique ayant un pH inférieur ou égal à 6, comprenant entre 5 et 500 g par litre d'au moins une substance choisie parmi l'ensemble constitué par les protéines, les polypeptides, les aminoacides et leurs mélanges, et obtenu par traitement de 100 parties en poids d'une composition aqueuse renfermant au moins une substance protéinique choisie parmi l'ensemble constitué par les protéines, les polypetides et leurs mélanges, avec au moins une souche bactérienne produisant de l'acide lactique ayant une population supérieure ou égale à $10^2$ germes/cm$^3$, en présence de 0,5 à 30 parties en poids d'une source de carbone appartenant à la famille des carbohydrates, pendant au moins 2 heures, à une température comprise entre 0 et 65 °C et à un pH inférieur ou égal à 6.

L'hydrolysat protéinique utile selon l'invention dans le domaine de la construction est utilisable directement à l'état liquide ou humide. Avant d'être associé à un liant hydraulique et à de l'eau, ou les cas échéant à un liant hydraulique, de l'eau avec du sable et/ou des granulats, il peut être conservé dans un récipient convenable pendant ou moins 18 mois à une température comprise entre −5 et +60 °C.

L'adjuvant protéinique selon l'invention est différent du fait de son mode d'obtention des moyens préconisés par le brevet allemand 511 513, d'une part et le résumé des Chemical Abstracts 88, 140 835 t, d'autre part.

Parmi les hydrolysats protéiniques qui conviennent on peut notamment citer ceux qui sont obtenus à partir de protéines animales ou végétales. Parmi ces protéines on peut mentionner les protéines d'origine animale telles que les protéines de produits carnés, les protéines des produits du cinquième quartier, les protéines du lait, les protéines de poissons entiers, les déchets de poissons, les albumines (notamment l'albumine d'œuf), et les protéines végétales telles que celles contenues dans les légumineuses, les oléagineux, les solanacées (notamment le tabac) et les algues.

Les substances protéiniques qui conviennent pour l'obtention de l'hydrolysat selon l'invention sont notamment des protéines animales et végétales précitées ainsi que les hydrolysats et protéolysats desdites protéines animales et végétales qui comprennent notamment soit des protéines qui ne sont pas encore dégradées, soit des polypeptides, soit encore des mélanges de protéines et de polypeptides, en association, le cas échéant, avec des amino-acides.

On a intérêt à soumettre rapidement les protéines de produits carnés broyés, ou les protéines de produits du cinquième quartier broyés ou liquides au traitement avec les bactéries produisant de l'acide lactique. Avant ledit traitement, surtout s'il est retardé, on préconise d'associer aux substances protéiniques 1 à 15% en poids de céréales broyées.

Parmi les bactéries produisant de l'acide lactique qui intervient dans la préparation de l'hydrolysat utile selon l'invention comme adjuvant dans le domaine de la construction, on peut faire appel à des Streptococcus (notamment à des Streptococcus bovis, Streptococcus thermophilus, Streptococcus faecalis, Streptococcus faecium, Streptococcus cremoris, Streptococcus lactis), des Leuconostoc (notamment des Leuconostoc mesenteroides, Leuconostoc lactis, Leuconostoc cremoris) et des Lactobacillus (notamment des Lactobacillus delbrueckii, Lactobacillus Leichmanii, Lactobacillus jensenii, Lactobacillus lactis, Lactobacillus bulgaricus, Lactobacillus helveticus, Lactobacillus acidophilus, Lactobacillus casei, Lactobacillus plantarum). Parmi les souches qui conviennent on peut notamment citer les souches de la Collection de l'Institut Pasteur Streptococcus bovis 56.23, Streptococcus thermophilus 66.31, Streptococcus faecalis 54.32, Streptococcus faecium 54.31, Streptococcus lactis 70.57, Leuconostoc mesenteroides 53.49, Lactobacillus delbrueckii 57.8, Lactobacillus Leichmanii 53.61, 53.3 et 53.4, Lactobacillus jensenii 69.17, Lactobacillus bulgaricus 71.36, Lactobacillus helveticus 57.15, Lactobacillus acidophilus 76.13 et 71.34, Lactobacillus casei 71.37, 71.38 et A 158, Lactobacillus plantarum 71.39, et la souche du catalogue de l'American Type Culture Collection Lactobacillus lactis ATCC 8000.

Selon l'invention on utilisera une ou plusieurs souches de bactéries productrices d'acide lactique. La population bactérienne sera comprise entre $10^2$ germes/cm$^3$ et $10^8$ germes/cm$^3$, et avantageusement entre $10^3$ germes/cm$^3$ et $10^6$ germes/cm$^3$.

La teneur totale en substance protéinique et aminoacide contenue dans l'hydrolysat protéinique liquide selon l'invention est comprise entre 0,5 et 50% poids/volume. Si nécessaire on peut concentrer sous vide et/ou stériliser l'hydrolysat protéinique.

Les carbohydrates qui interviennent comme source de carbone peuvent être hydrolysables ou non hydrolysables, les carbohydrates préférés étant notamment le glucose, le lactose, le saccharose, le maltose, l'amidon hydrosoluble, et le lactosérum.

Il est possible de sélectionner la ou les souches bactériennes utilisables selon l'invention en se référant d'une part à la stabilité intrinsèque de l'hydrolysat protéinique liquide obtenu et d'autre part à un test d'utilisation que l'on peut décrire de la façon suivante:

On réalise deux bétons A et B de compositions suivantes:

|  | A | B |
|---|---|---|
| ciment type CPJ 45 avec filières | 400 g | 400 g |
| chaux type HA | 40 g | 40 g |
| granulat léger | 2 l | 2 l |
| (polystyrène 1 à 5 mm de diamètre) |  |  |
| adjuvant | 0 g | 22 g |

L'adjuvant selon l'invention ajouté au béton A aura pour rôle une densification dudit béton équivalent à au moins 10% d'air entraîné.

Selon l'invention on préconise un procédé de fabrication d'élément de construction à partir d'un liant hydraulique, d'eau et d'un adjuvant protéinique liquide, caractérisé en ce que l'on mélange 100 parties en poids de liant hydraulique avec 0,001 à 10 parties en poids d'adjuvant protéinique liquide préalablement dilué avec de l'eau de gâchage. De façon avantageuse on utilisera 20 à 50 parties en poids d'eau de gâchage pour 100 parties en poids de liant hydraulique.

Selon ce procédé on peut également introduire du sable et/ou des granulats qui peuvent être légers et éventuellement expansés (billes de polystyrène, billes de verre, mica, vermiculite) ou lourds selon la masse volumique désirée du matériau de construction.

On pourra selon le procédé de l'invention obtenir quatre types de matériau, à savoir:

matériau A, à partir de
– 100 parties en poids de liant hydraulique, et
– 0,001 à 10 parties en poids d'adjuvant protéinique;
matériau B, à partir de
– 100 parties en poids de liant hydraulique,
– 0,001 à 10 parties en poids d'adjuvant protéinique, et
– 1 à 9000 parties en poids de sable;
matériau C, à partir de
– 100 parties en poids de liant hydraulique,
– 0,001 à 10 parties en poids d'adjuvant protéinique, et
– 1 à 9000 parties en poids de granulats; et,
matériau D, à partir de
– 100 parties en poids de liant hydraulique,
– 0,001 à 10 parties en poids d'adjuvant protéinique,
– 1 à 9000 parties en poids de sable, et
– 1 à 90000 parties en poids granulats.

Le meilleur mode de mise en œuvre de l'invention consiste, pour obtenir un matériau de construction, à mélanger 100 parties en poids de liant hydraulique (notamment du ciment ou du laitier de haut-fourneau) avec 0,001 à 10 parties en poids d'adjuvant protéinique préalablement dilué dans, de préférence, 30 à 35 parties en poids d'eau avec, le cas échéant, du sable et/ou des granulats légers ou lourds, l'adjuvant protéinique étant obtenu à partir de sang animal liquide qui est un des éléments du cinquième quartier. Le sang animal frais qui est recueilli à l'abattoir doit être additionné d'un anticoagulant (notamment un anticoagulant choisi parmi l'ensemble constitué par les citrates de métaux alcalins, les polyphosphates, l'héparine et les silicones) dans les 5 minutes qui suivent la saignée. De façon avantageuse on incorporera 0,05 à 1 partie en poids sec d'anticoagulant à 100 parties en poids de sang liquide frais, le traitement avec les bactéries produisant de l'acide lactique intervenant au plus tard 6 heures après la saignée.

Il n'est pas nécessaire de faire appel à un malaxeur particulier comme indiqué dans le brevet américain No 4 203 674 précité, on mélange le liant avec l'eau de gâchage contenant l'adjuvant protéinique, puis, le cas échéant, le sable et/ou les granulats, avec un malaxeur classique opérant à 50 – 100 tours minutes.

D'autres avantages et caractéristiques de l'invention seront mieux compris à la lecture de la description qui va suivre d'exemples de mise en œuvre nullement limitatifs mais donnés à titre d'illustration.

Exemple 1
Béton de granulats légers.
On prépare un béton à partir des ingrédients suivants:

– liant hydraulique (ciment):
250 parties en poids;

– sable ayant des particules de diamètre inférieur ou égal à 0,8 mm:

50 parties en poids;

– granulats légers (billes de polystyrène):

10 parties en poids;

– adjuvant protéinique liquide (hydrolysat de sang de bœuf ayant une teneur totale en protéines, polypeptides et amino-acides comprise entre 15 et 20% poids/volume):

10 parties en poids;

– eau de gâchage: 80 parties en poids.

On procède à l'homogénéisation du liant (30 secondes), on ajoute l'eau de gâchage contenant l'adjuvant protéinique (30 secondes), le sable et les granulats, puis on malaxe pendant 60 à 120 secondes avec un malaxeur opérant de 100 à 60 tours/minute.

Le béton ainsi obtenu peut alors être soit compacté, soit vibré, puis démoulé immédiatement pour l'obtention d'articles préfabriqués, soit encore directement mis en place après pompage, extrusion à froid ou projection sur chantier.

Après conservation sous atmosphère humide (100% d'HR) à 20°C pendant 7 jours, ce béton présente une masse volumique apparente (MVA) de 400 kg/m$^3$, et (selon les mesures effectuées sur des éprouvettes de 28 cm×7 cm×7 cm) une résistance en traction-flexion (TF) de 7×10$^5$ à 10$^6$ pascals et une résistance en compression (RC) de 1,4×10$^6$ à 2,5×10$^6$ pascals.

Par comparaison, le béton obtenu en remplaçant les 10 parties en poids d'adjuvant protéinique par 10 parties en poids d'eau donne dans les mêmes conditions:

MVA  350 kg/m$^3$
TF   5×10$^4$ à 2×10$^5$ pascals
RC   2×10$^5$ à 4×10$^5$ pascals

Exemple 2
Béton de granulats lourds

On obtient un béton en procédant comme indiqué à l'exemple 1, à partir des ingrédients suivants:

– liant hydraulique (ciment):

260 parties en poids;

– gravier (ayant des particules de diamètre compris entre 3 et 8 mm):

1400 parties en poids;

– sable: 50 parties en poids;

– adjuvant protéinique liquide (hydrolysat de sang de bœuf ayant une teneur totale en protéines, polypeptides et amino-acides de 15 à 20% poids/volume): 10 parties en poids;

– eau: 80 parties en poids.

Ce béton après conservation sous atmosphère humide (100% HR) à 20°C pendant 7 jours, comme indiqué à l'exemple 1, présente les propriétés suivantes:

MVA  1800 kg/m$^3$
TF   2,3×10$^6$ pascals
RC   9,7×10$^6$ pascals

En revanche, le produit obtenu en remplaçant les 10 parties en poids d'adjuvant protéinique par 10 parties en poids d'eau présente dans les mêmes conditions les propriétés suivantes:

MVA  1800 kg/m$^3$
TF   1,6×10$^6$ pascals
RC   7,8×10$^6$ pascals

Les essais effectués avec les matériaux de construction obtenus selon l'invention avec l'adjuvant protéinique provenant du sang ou d'une autre source protéinique montrent que ledit adjuvant possède un pouvoir épaississant, un pouvoir gélifiant et un pouvoir émulsifiant.

En ce qui concerne le pouvoir épaississant, on observe que l'adjuvant protéinique selon l'invention est capable de lier une certaine quantité d'eau avec une force d'autant plus grande qu'elle est en association intime avec lui. Cette capacité à retenir l'eau entraîne une expansion des molécules de l'adjuvant protéinique à l'origine d'une augmentation de la viscosité.

En ce qui concerne le pouvoir gélifiant, on constate que l'adjuvant protéinique, sous l'effet de la prise des liants hydrauliques, forme une matrice tridimensionnelle enfermant dans ses mailles les composants du matériau de construction.

En ce qui concerne le pouvoir émulsifiant, on constate un abaissement de la tension interfaciale qui existe entre deux faces non miscibles, telles que les gras et l'eau. Les macromolécules et l'adjuvant protéinique présentant un pôle lipophile et un pôle hydrophile se placent essentiellement aux interfaces des gouttes. Le pôle hydrophile dans l'eau et le pôle lipophile dans le gras se regroupent entre eux pour former des bulles d'air. Il en résulte un réarrangement qui diminue ou supprime la tension interfaciale.

Les matériaux de construction selon l'invention sont notamment utiles dans la fabrication de nombreux articles de construction. Le béton léger de l'exemple 1 est particulièrement avantageux dans la fabrication des tabliers de pont, il permet de diminuer le poids de la structure métallique, d'assurer une meilleure répartition des surcharges et, du fait de ses propriétés isolantes, de limiter la conduction des vibrations.

Dans le domaine des routes et des autoroutes, le béton de l'exemple 1 permet simultanément (i) d'assurer une bonne protection vis-à-vis des cycles de gel/dégel, et (ii) de diminuer la profondeur des fondations. Selon les techniques classiques, une route à circulation élevée comprend de haut en bas:

– une couche de revêtement superficiel de 5 cm,

– une couche bitumeuse de 18,5 cm,

– une couche portante de granulats roulés de 15 cm,

– une couche aérée de protection contre le gel de 45 cm, et

– une couche dite de fondation de 20 cm.

Avec le béton de l'exemple 1 on a avantageusement diminué l'épaisseur totale en remplaçant la couche portante de granulats roulés et la couche de protection contre le gel par une seule couche de béton de 22 cm, tout en ayant la même protection vis-à-vis des cycles de gel/dégel.

Les bétons selon l'invention sont également utiles dans la préparation d'hourdis, d'entrevous, de dalles de toiture, de cloisons préfabriquées et de conduits de fumée.

A titre d'information on décrit ci-après un mode de préparation de l'hydrolysat (protéine stabilisée) utilisable selon l'invention:

100 litres de sang de bœuf (recueillis sur des animaux sains) sont additionnés de 600 g de citrate de sodium (agent anticoagulant) dans les 5 minutes qui suivent la saignée. On traite ensuite ce sang (dans les 3 heures qui suivent la saignée) avec des bactéries productrices d'acide lactique (mélange de Streptococcus lactis, Leuconostoc mesenteroides et Lactobacillus casei) de façon que la population bactérienne dans le milieu résultant soit au moins de $10^5$ germes/$cm^3$ et 10 kg d'hydrate de carbone (amidon hydrosoluble), pendant 24 h à 28°C, le pH du milieu résultant étant toujours inférieur à 6 (au fur et à mesure de la formation d'acide lactique, le pH se stabilise à environ 4,7).

L'analyse de cet hydrolysat conservé pendant 15 mois, à une température comprise entre 15 et 20°C et à un pH d'environ 4,7, donne les résultats suivants consignés dans le tableau 1 avec une teneur en azote aminé total de 2,58%.

Tableau 1

| Composants | Composition en g/pour 100 g d'hydrolysat protéinique |
|---|---|
| Acide aspartique | 2,22 |
| Thréonine | 1,08 |
| Sérine | 1,13 |
| Acide glutamique | 2,01 |
| Proline | 0,839 |
| Glycine | 0,978 |
| Alanine | 1,67 |
| Valine | 1,78 |
| Cystine | 0,313 |
| Méthionine | 0,309 |
| Isoleucine | 0,196 |
| Leucine | 2,30 |
| Tyrosine | 0,635 |
| Phénylalanine | 1,36 |
| Lysine | 1,91 |
| Histidine | 1,20 |
| Arginine | 0,767 |
| Tryptophane | 0,279 |
| $NH_3$ après hydrolyse (HCl 6 N) | 0,114 |

**Revendications**

1. Adjuvant protéinique pour liants hydrauliques, mortiers et bétons, utile pour améliorer les propriétés mécaniques et l'ouvrabilité, et diminuer le ressuage et la ségrégation, caractérisé en ce qu'il s'agit d'un hydrolysat protéinique ayant un pH inférieur ou égal à 6, comprenant entre 5 et 500 g par litre d'au moins une substance choisie parmi l'ensemble constitué par les protéines, les polypeptides, les amino-acides et leurs mélanges, et obtenu par traitement de 100 parties en poids d'une composition aqueuse renfermant au moins une substance protéinique choisie parmi l'ensemble constitué par les protéines, les polypeptides et leurs mélanges, avec au moins une souche bactérienne produisant de l'acide lactique ayant une population supérieure ou égale à $10^2$ germes/$cm^3$, en présence de 0,5 à 30 parties en poids d'une source de carbone appartenant à la famille des carbohydrates, pendant au moins 2 heures, à une température comprise entre 0 et 65°C et à un pH inférieur ou égal à 6.

2. Adjuvant selon la revendication 1, caractérisé en ce que la substance protéinique utilisée comme matière première soumise au traitement avec au moins une souche de bactéries productrices d'acide lactique est choisie parmi les protéines de produits carnés, les protéines des produits du cinquième quartier, les protéines du lait, les protéines de poissons entiers, les protéines de déchets de poissons, les albumines, les protéines de légumineuses, d'oléagineux, de solanacées et d'algues.

3. Adjuvant protéinique pour liants hydrauliques, mortiers et bétons, utile pour améliorer les propriétés mécaniques et l'ouvrabilité, et diminuer le ressuage et la ségrégation, caractérisé en ce qu'il s'agit d'un hydrolysat protéinique ayant un pH inférieur ou égal à 6, comprenant entre 5 et 500 g par litre d'au moins une substance choisie parmi l'ensemble constitué par les protéines, les polypeptides, les amino-acides et leurs mélanges et obtenu par traitement de 100 parties en poids d'une composition aqueuse renfermant au moins une substance protéinique choisie parmi l'ensemble constitué par le sang animal liquide additionné d'un anticoagulant, les autres protéines du cinquième quartier, les protéines de produits carnés, les protéines de poissons entiers, les protéines de déchets de poissons et leurs mélanges, avec au moins une souche bactérienne produisant de l'acide lactique ayant une population supérieure ou égale à $10^2$ germes/$cm^3$, en présence de 0,5 à 30 parties en poids d'une source de carbone appartenant à la famille des carbohydrates, pendant au moins 2 heures, à une température comprise entre 0 et 65°C et à un pH inférieur ou égal à 6.

4. Adjuvant protéinique pour liants hydrauliques, mortiers et bétons, utile pour améliorer les propriétés mécaniques et l'ouvrabilité, et diminuer le ressuage et la ségrégation, caractérisé en ce qu'il s'agit d'un hydrolysat protéinique ayant un pH inférieur ou égal à 6, comprenant entre 5 et 500 g par litre d'au moins une substance choisie parmi l'ensemble constitué par les protéines, les polypeptides, les amino-acides et leurs mélanges, et obtenu par traitement de 100 parties en poids d'une composition aqueuse renfermant au moins une substance protéinique constituée par le sang animal liquide additionné d'un anticoagulant, avec au moins une souche bactérienne produisant de l'acide lactique ayant une population supérieure ou égale à $10^2$ germes/cm$^3$, en présence de 0,5 à 30 parties en poids d'une source de carbone appartenant à la famille des carbohydrates, pendant au moins 2 heures, à une température comprise entre 0 et 65°C et à un pH inférieur ou égal à 6.

5. Adjuvant selon la revendication 4, caractérisé en ce que la substance protéinique renferme 0,05 à 1 partie en poids sec d'anticoagulant pour 100 parties en poids de sang animal liquide.

6. Procédé de fabrication d'un élément de construction à partir d'un liant hydraulique et d'un adjuvant protéinique selon l'une quelconque des revendications 1 à 4, caractérisé en ce que l'on mélange 100 parties en poids de liant hydraulique avec 0,001 à 10 parties en poids d'adjuvant protéinique.

7. Procédé selon la revendication 5, caractérisé en ce que l'on utilise 20 à 50 parties en poids d'eau de gâchage pour 100 parties en poids de liant hydraulique.

## Patentansprüche

1. Zusatzmittel aus Protein für hydraulische Bindemittel, Mörtel und Beton zur Verbesserung der mechanischen Eigenschaften und der Verarbeitbarkeit und zur Verminderung des Ausschwitzens und des Entmischens, gekennzeichnet durch ein Proteinhydrolysat mit einem pH-Wert gleich oder unter 6 mit 5 bis 500 g/l mindestens einer Substanz, ausgewählt unter Proteinen, Polypeptiden, Aminosäuren und ihren Gemischen, erhältlich durch Behandeln von 100 Gew.-Teilen einer wässrigen Zusammensetzung mit mindestens einer Proteinsubstanz, ausgewählt unter Proteinen, Polypeptiden und ihren Gemischen, mit mindestens einem Milchsäure produzierenden Bakterienstamm mit einer Dichte gleich oder über $10^2$ Keimen/cm$^3$ in Gegenwart von 0,5 bis 30 Gew.-Teilen eines Kohlenhydrats als Kohlenstoffquelle, während mindestens 2 h bei einer Temperatur von 0 bis 65°C und einem pH-Wert gleich oder unter 6.

2. Zusatzmittel nach Anspruch 1, dadurch gekennzeichnet, dass die als Ausgangsmaterial verwendete und mit mindestens einem Milchsäure produzierenden Bakterienstamm behandelte Proteinsubstanz unter Proteinen von Fleischprodukten, Proteinen von Schlachthofprodukten, Milchproteinen, Proteinen von ganzen Fischen, Proteinen von Fischabfällen, Albuminen, Proteinen von Leguminösen, Oleaceen, Solanaceen und Algen ausgewählt wird.

3. Zusatzmittel aus Protein für hydraulische Bindemittel, Mörtel und Beton zur Verbesserung der mechanischen Eigenschaften und der Verarbeitbarkeit und Verminderung des Ausschwitzens und des Entmischens, gekennzeichnet durch ein Proteinhydrolysat mit einem pH-Wert gleich oder unter 6 mit 5 bis 500 g/l mindestens einer Substanz, ausgewählt unter Proteinen, Polypeptiden, Aminosäuren und ihren Gemischen, erhältlich durch Behandeln von 100 Gew.-Teilen einer wässrigen Zusammensetzung mit mindestens einer Proteinsubstanz, ausgewählt unter mit einem Antikoagulans versetzten flüssigen Tierblut, anderen Proteinen des Schlachthofs, Proteinen von Fleischprodukten, Proteinen von ganzen Fischen, Proteinen von Fischabfällen und ihren Gemischen, mit mindestens einem Milchsäure produzierenden Bakterienstamm mit einer Dichte gleich oder über $10^2$ Keimen/cm$^3$ in Gegenwart von 0,5 bis 30 Gew.-Teilen eines Kohlenhydrats als Kohlenstoffquelle, während mindestens 2 h bei einer Temperatur von 0 bis 65°C und einem pH-Wert gleich oder unter 6.

4. Zusatzmittel aus Protein für hydraulische Bindemittel, Mörtel und Beton zur Verbesserung der mechanischen Eigenschaften und der Verarbeitbarkeit und Verminderung des Ausschwitzens und des Entmischens, gekennzeichnet durch ein Proteinhydrolysat mit einem pH-Wert gleich oder unter 6 mit 5 bis 500 g/l mindestens einer Substanz, ausgewählt unter Proteinen, Polypeptiden, Aminosäuren und ihren Gemischen, erhältlich durch Behandeln von 100 Gew.-Teilen einer wässrigen Zusammensetzung mit mindestens einer Proteinsubstanz, die aus mit einem Antikoagulans versetzten flüssigen Tierblut besteht, mit mindestens einem Milchsäure produzierenden Bakterienstamm mit einer Dichte gleich oder über $10^2$ Keimen/cm$^3$ in Gegenwart von 0,5 bis 30 Gew.-Teilen eines Kohlenhydrats als Kohlenstoffquelle, während mindestens 2 h bei einer Temperatur von 0 bis 65°C und einem pH-Wert gleich oder unter 6.

5. Zusatzmittel nach Anspruch 4, dadurch gekennzeichnet, dass die Proteinsubstanz 0,05 bis 1 Gew.-Teil (Trockengewicht) eines Antikoagulans je 100 Gew.-Teile flüssigen Tierbluts enthält.

6. Verfahren zur Herstellung eines Bauelements aus einem hydraulischen Bindemittel und einem Zusatzmittel aus Protein nach einem der Ansprüche 1 bis 4, dadurch gekennzeichnet, dass 100 Gew.-Teile hydraulisches Bindemittel mit 0,001 bis 10 Gew.-Teilen des Protein-Zusatzmittels vermischt werden.

7. Verfahren nach Anspruch 5, dadurch gekennzeichnet, dass 20 bis 50 Gew.-Teile Anrührwasser für 100 Gew.-Teile hydraulisches Bindemittel verwendet werden.

## Claims

1. Protein additive for hydraulic cements, mortars and concretes, useful for improving mechanical properties and workability and for reducing sweating and segregation, characterized in that it is a protein hydrolysate having a pH less than or equal to 6, comprising between 5 and 500 g per liter of at least one substance selected from the group constituted by proteins, polypeptides, aminoacids and mixtures thereof, and obtained by treating 100 parts by weight of an aqueous composition containing at least one protein substance selected from the group constituted by proteins, polypeptides and mixtures thereof, with at least one bacterial strain producing lactic acid having a population greater than or equal to $10^2$ germs/$cm^3$, in the presence of 0.5 to 30 parts by weight of a source of carbon belonging to the family of carbohydrates, for at least 2 hours, at a temperature of between 0 and 65°C and at a pH less than or equal to 6.

2. Additive according to claim 1, characterized in that the protein substance used as raw material subjected to the treatment with at least one strain of lactic acid-producing bacteria is selected from meat product proteins, offal product proteins, milk proteins, whole fish proteins, fish waste proteins, albumins, proteins of leguminosae, oleaginous plants, Solanaceae and of algae.

3. Protein additive for hydraulic cements, mortars and concretes, useful for improving mechanical properties and workability and for reducing sweating and segregation, characterized in thtat it is a protein hydrolysate having a pH less than or equal to 6, comprising between 5 and 500 g per liter of at least one substance selected from the group constituted by proteins, polypeptides, aminoacids and mixtures thereof, and obtained by treating 100 volumes of an aqueous composition containing at least one protein substance selected from the group constituted by liquid animal blood to which an anticoagulant is added, the other offal proteins, meat product proteins, whole fish proteins, fish waste proteins and mixtures thereof, with at least one bacterial strain producing lactic acid having a population greater than or equal to $10^2$ germs/$cm^3$, in the presence of 0.5 to 30 parts by weight of a source of carbon belonging to the family of carbohydrates, for at least 2 hours, at a temperature of between 0 and 65°C and at a pH less than or equal to 6.

4. Protein additive for hydraulic cements, mortars and concretes, useful for improving mechanical properties and workability and for reducing sweating and segregation, characterized in that it is a protein hydrolysate having a pH less than or equal to 6, comprising between 5 and 500 g per liter of at least one substance selected from the group constituted by proteins, polypeptides, aminoacids and mixtures thereof, and obtained by treating 100 volumes of an aqueous composition containing at least one protein substance constituted by liquid animal blood to which an anticoagulant is added, with at least one bacterial strain producing lactic acid having a population greater than or equal to $10^2$ germs/$cm^3$, in the presence of 0.5 to 30 parts by weight of a source of carbon belonging to the family of carbohydrates, for at least 2 hours, at a temperature of between 0 and 65°C and at a pH less than or equal to 6.

5. Additive according to claim 4, characterized in that the protein substance contains 0.05 to 1 part by dry weight of anticoagulant for 100 parts by weight of liquid animal blood.

6. Process for manufacturing a construction element from a hydraulic cement and a protein additive according to any one of claims 1 to 4, characterized in that 100 parts by weight of hydraulic cement are mixed with 0.001 to 10 parts by weight of protein additive.

7. Process according to claim 6, characterized in that 20 to 50 parts by weight of mixing water are used for 100 parts by weight of hydraulic cement.